(19) Europäisches Patentamt
European Patent Office
Office européen des brevets

(11) **EP 2 811 455 A1**

(12) **EUROPEAN PATENT APPLICATION**

(43) Date of publication:
**10.12.2014 Bulletin 2014/50**

(51) Int Cl.:
***G06T 5/00*** *(2006.01)*

(21) Application number: **14168645.1**

(22) Date of filing: **16.05.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.05.2013 EP 13305722**

(71) Applicant: **Thomson Licensing
92130 Issy-les-Moulineaux (FR)**

(72) Inventor: **Hepper, Dietmar
30419 Hannover (DE)**

(74) Representative: **Schmidt-Uhlig, Thomas
Deutsche Thomson OHG
European Patent Operations
Karl-Wiechert-Allee 74
30625 Hannover (DE)**

(54) **Method and apparatus for generating a noise profile of noise in an image sequence**

(57) A method for generating a noise profile of noise in an image sequence and an apparatus (20) configured to generate such a noise profile are described. An image sequence is retrieved (10) via an input (20). An image analyzer (22) then determines (11) image regions in the image sequence suitable for measuring noise properties. A noise analyzer (23) measures (12) noise properties in the determined image regions. The measured noise properties are provided to a profile generator (24), which determines (13) a noise profile from the measured noise properties.

EP 2 811 455 A1

Fig. 1

## Description

### FIELD OF THE INVENTION

The invention relates to a method and to an apparatus for generating a noise profile of noise in an image sequence. More specifically, a method and an apparatus capable of determining parameters of noise profiles are described. The noise profiles allow describing the noise present in the image sequence, e.g. film grain noise.

### BACKGROUND OF THE INVENTION

One task in film or video production and processing is the removal and/or superimposition of film grain noise on an image sequence. A chemical film is made of color layers, e.g. one layer for a black-and-white film or three color layers for a color film. Each layer contains color particles or grains. If a film is scanned on a film scanner, the resulting digital signal contains film grain noise, which manifests as small-scale spatio-temporal noise artifacts caused by the film grain. While the cause is spatial, the visual appearance is both spatial and temporal.

Strong film grain typically reduces visual quality. Therefore, removal or reduction is desired for quality enhancement of scanned film. Where scanned film is source encoded for compression, film grain noise reduces the coding gain. Therefore, removal or reduction of film grain noise prior to encoding is an issue, combined with simulation and addition of film grain noise in the receiver. Finally, visual film grain appearance is sometimes wanted for non-film-originating video material, or a unified film grain noise level is sought for a sequence combined from various sources containing different film grain noise levels. Therefore, there is a requirement for film grain noise removal or reduction and/or superimposition, so-called film grain management.

There are restoration tools on the market that include basic versions of film grain management, i.e. film grain noise removal and film grain noise superimposition. For superimposition artificially generated grain is often used. However, there is a lack of determining, quantifying and describing properties of film grain noise that are essential for later film grain noise superimposition yielding a natural look and feel.

In this regard US 2002/0034337 discloses a method for analyzing the broadband noise content of a digital image. Regions of originally constant color in the image are automatically identified by analysis of the variance of pixel values. Regions deemed to be unrepresentative of the true noise content are automatically detected and discarded. The selected constant color regions are analyzed in order to generate a parametric or non-parametric model of the noise in the image. However, the document only deals with single images. In addition, only a rough $2 \times 2$ sub-band analysis of the noise is performed.

US 5,641,596 describes a method for extracting and storing statistics of the grain pattern of scanned film. The statistics are representative of local, spatial, and spectral properties of a photographic grain pattern of that type of film. The statistical results are stored and used smoothing the film grain noise or for reducing its effects.

P. Schallauer et al: "Rapid and Reliable Detection of Film Grain Noise", 2006 IEEE International Conference On Image Processing (2006), pp. 413-416, disclose a rapid and reliable detector for film grain properties. First, homogeneous blocks concerning intensity and texture are determined by a measure calculated in the frequency domain. Second, based on these blocks the signal-dependent grain noise level is estimated and an image region of pure film grain is detected.

EP 0 957 367 discloses a method for measuring a noise level for an image sequence. Static areas in subsequent frames are determined and frames differences between such subsequent static areas are evaluated. From these frame differences a noise level is derived.

EP 2 413 586 discloses a method for measuring a noise level for an image sequence. Uniform areas in an image are searched and a spatial noise value is determined for such areas. Then, static areas in subsequent images are determined, from which a temporal noise value is calculated.

B. T. Oh et al: "Advanced Film Grain Noise Extraction and Synthesis for High-Definition Video Coding", IEEE Transactions On Circuits And Systems For Video Technology, Vol. 19 (2009), pp. 1717-1729, disclose a technique for film grain noise extraction, modeling and synthesis. First film grain noise is removed from image/video with a variational denoising approach without distorting its original content. Then a parametric model consisting of a small set of parameters is used to generate film grain noise that is close to the actual one in terms of a couple of observed statistical properties, such as the power spectral density and the cross-channel spectral correlation.

### SUMMARY OF THE INVENTION

It is an object of the invention to provide a more versatile solution for determining properties of noise in an image sequence.

According to the invention, this object is achieved by a method, an apparatus, and a computer readable storage medium as defined in the appended independent claims.

According to one aspect of the invention, a method for generating a noise profile of noise in an image sequence comprises the steps of:

- retrieving an image sequence;
- determining image regions in the image sequence suitable for measuring noise properties, the image regions in the image sequence suitable for measuring noise properties being single-color images, flat regions in an image containing a constant noise-free signal component and superimposed noise, smooth regions in an image containing low-frequency signal components and superimposed noise, or static regions of an image showing no motion relative to a temporally adjacent image;
- measuring noise properties in the determined image regions, the measured noise properties comprising spatial or temporal properties in dependence of signal levels of image channels, shape of noise spectra, or bandwidth of noise spectra; and
- determining a noise profile from the measured noise properties, the noise profile comprising parameters of functions used for describing the measured noise properties for an image.

Accordingly, an apparatus configured to generate a noise profile of film grain noise in an image sequence comprises:

- an input configured to retrieve an image sequence;
- an image analyzer configured to determine image regions in the image sequence suitable for measuring noise properties, the image regions in the image sequence suitable for measuring noise properties being single-color images, flat regions in an image containing a constant noise-free signal component and superimposed noise, smooth regions in an image containing low-frequency signal components and superimposed noise, or static regions of an image showing no motion relative to a temporally adjacent image;

- a noise analyzer configured to measure noise properties in the determined image regions, the measured noise properties comprising spatial or temporal properties in dependence of signal levels of image channels, shape of noise spectra, or bandwidth of noise spectra; and
- a profile generator configured to determine a noise profile from the measured noise properties, the noise profile comprising parameters of functions used for describing the measured noise properties for an image.

Similarly, a computer readable storage medium has stored therein instructions enabling generating a noise profile of film grain noise in an image sequence, which when executed by a computer, cause the computer to:

- retrieve an image sequence;
- determine image regions in the image sequence suitable for measuring noise properties, the image regions in the image sequence suitable for measuring noise properties being single-color images, flat regions in an image containing a constant noise-free signal component and superimposed noise, smooth regions in an image containing low-frequency signal components and superimposed noise, or static regions of an image showing no motion relative to a temporally adjacent image;
- measure noise properties in the determined image regions, the measured noise properties comprising spatial or temporal properties in dependence of signal levels of image channels, shape of noise spectra, or bandwidth of noise spectra; and
- determine a noise profile from the measured noise properties, the noise profile comprising parameters of functions used for describing the measured noise properties for an image.

The solution according to the invention allows measuring and quantifying properties of noise in film image sequences. It is especially advantageous for film grain noise.

Advantageously, the image sequence is a sequence of scanned test patterns. Such a sequence ensures that reliable noise characteristics are obtained as a reference for later noise processing.

Especially for natural image sequences, properties of noise can best be measured in image regions containing noise only, or nearly only, namely flat regions, smooth regions, and static regions.

Flat image regions are identified either by visual inspection of images or by an automatic signal analysis step, e.g. exploiting local image variance measures or energy in local Fourier transforms. The histogram, spectrum, signal-dependent power, etc. of the image signal minus the average are then evaluated to measure the spatial properties of noise for a certain channel signal level, e.g. the levels of the RGB or YUV channels.

The frame differences in static image regions, located for example by a change detection or motion estimation step, are analyzed for measuring temporal properties of noise, in the best case over the complete signal range. Signal-dependent noise variance is half the frame difference variance. High-frequency signal components in smooth regions are regarded as being noise primarily and are therefore analyzed, too, in order to obtain spatial properties of noise. This allows selecting smooth regions that cover a wide image signal range.

The functions of noise versus signal level for the different channels are approximated by classes of simple mathematical functions, quantified and described by a small set of parameters. The resulting parameters are stored in a file for later use. Classes of functions include at least parabolae, exponential functions, linear functions, or combinations thereof. Advantageously also the shape of the spectra of the noise signal color components or channels, e.g. with regard to bandwidths, roll-off, or form, are measured and approximated.

The invention allows determining essential properties of film grain noise from natural film image sequences and describing them in an efficient and useful way. Properties are obtained that are essential for later film grain noise superimposition yielding a true natural look and feel. Properties can be determined for any type of film of interest. Thus certain sets of parameters can transparently be associated with certain types of film.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims.

**BRIEF DESCRIPTION OF THE DRAWINGS**

Fig. 1    schematically illustrates a method according to the invention for determining properties of noise in an image sequence;

Fig. 2    depicts an apparatus configured to implement the method of Fig. 1;

Fig. 3    depicts a block diagram of a process for determining film grain noise properties;

Fig. 4    illustrates a block diagram of measurement of film grain noise properties using an artificial test sequence;

Fig. 5    depicts a first example of a 2K test sequence;

Fig. 6    shows a second example of a 2K test sequence;

Fig. 7    illustrates a block diagram of generating a film grain noise sample;

Fig. 8    illustrates an apparatus for generating a film grain noise sample;

Fig. 9    shows a first set of representative graphs of variance of frame differences as a function of image signal level for SD sequences;

Fig. 10    shows a second set of representative graphs of variance of frame differences as a function of image signal level for SD sequences;

Fig. 11    shows a third set of representative graphs of variance of frame differences as a function of image signal level for SD sequences;

Fig. 12    shows a first set of representative graphs of variance of frame differences as a function of image signal level for 2K/HD sequences;

Fig. 13    shows a second set of representative graphs of variance of frame differences as a function of image signal level for 2K/HD sequences;

Fig. 14    shows a representative graph of variance of frame differences as a function of image signal level for a 4K sequence;

Fig. 15    depicts a histogram of R, G, and B components of a nearly flat region "M" in an SD sequence;

Fig. 16    shows a histogram of frame differences of the region "M" in the SD sequence;

Fig. 17    depicts variance of frame differences as a function of the image signal level for the same SD sequence in region M;

Fig. 18    shows a histogram of frame differences as a function of the image signal for the B component of the SD sequence in region M;

Fig. 19    gives some explanations for interpreting the histogram of Fig. 18;

Fig. 20    shows an example of the magnitude of the Fourier transform of the frame differences as a function of normalized horizontal and vertical frequencies;

Fig. 21    depicts some evaluation results for scanned natural grey films;

Fig. 22    shows some evaluation results for a scanned SD sequence;

Fig. 23    depicts some evaluation results for a scanned 2K/HD sequence; and

Fig. 24    shows some evaluation results for a scanned 4K sequence.

## DETAILED DESCRIPTION OF A PREFERRED EMBODIMENT

In the following the invention shall be explained with reference to film grain noise as an example for noise in an image sequence. Of course, the invention is not limited to this type of noise. The invention can be used for determining the properties of any kind of noise or low-level signal component in given image regions. It can also be used to determine certain properties of an error signal resulting from some processing step involving image signal degradation, such as image compression or other processing. The invention can also be used for other fields of application rather than film.

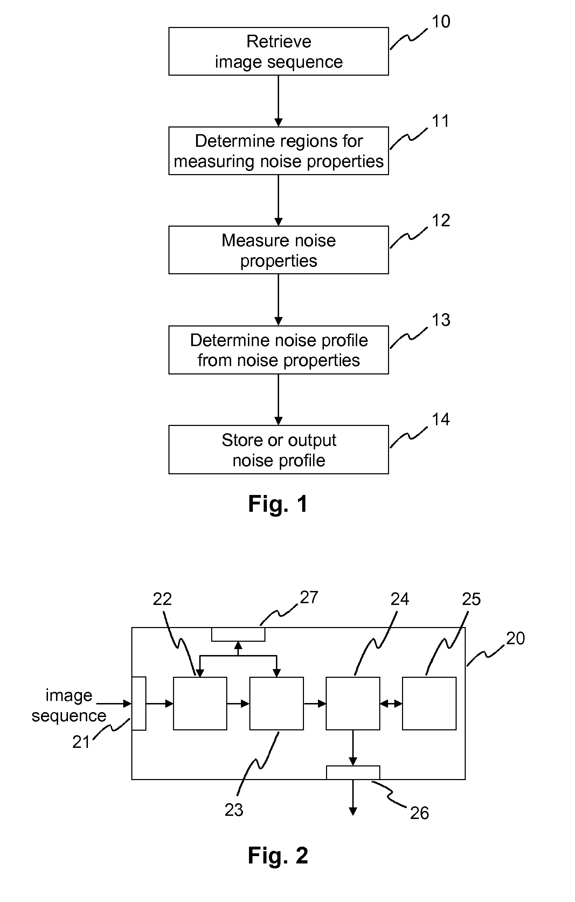

A method according to the invention for generating a noise profile of film grain noise in an image sequence is schematically illustrated in Fig. 1. After retrieving 10 an image sequence, e.g. from a network or from a local storage, image regions in the image sequence suitable for measuring noise properties are determined 11. The determined image regions are single-color images, flat regions in an image containing a constant noise-free signal component and superimposed noise, smooth regions in an image containing low-frequency signal components and superimposed noise, or static regions of an image showing no motion relative to a temporally adjacent image. The desired noise properties are then measured 12 in the determined image regions. The measured noise properties comprise spatial or temporal properties in dependence of signal levels of image channels, shape of noise spectra, or bandwidth of noise spectra. The measurement results are used for determining 13 a noise profile for the image sequence, which comprises parameters of functions used for describing the measured noise properties for an image. Preferably, the noise profile is stored 14 and/or provided to a network.

Fig. 2 depicts an apparatus 2 configured to implement the method of Fig. 1. The apparatus 20 has an input 20 for retrieving 10 an image sequence. An image analyzer 22 then determines 11 image regions in the image sequence suitable for measuring noise properties, i.e. single-color images, flat regions in an image containing a constant noise-free signal component and superimposed noise, smooth regions in an image containing low-frequency signal components and superimposed noise, or static regions of an image showing no motion relative to a temporally adjacent image. A noise analyzer 23 measures 12 noise properties in the determined image regions. The measured noise properties comprise spatial or temporal properties in dependence of signal levels of image channels, shape of noise spectra, or bandwidth of noise spectra. The measured noise properties are provided to a profile generator 24, which determines 13 a noise profile from the measured noise properties. The noise profile comprises parameters of functions used for describing the measured noise properties for an image. The resulting noise profile is preferably stored 14 in a storage unit 25 and/or provided to a network via an output 26. Advantageously, the apparatus 20 further has a user interface 27 enabling a user to interact with the different units of the apparatus 20, e.g. for modifying the selection of suitable image regions or for influencing the profile generation. Of course, the input 21 may be combined with the output 25 into a bi-directional communication interface. Also, the various units of the apparatus 20 may likewise be combined or partially combined into a single unit or implemented as software running on a processor.

For estimating the properties of (film grain) noise in an image sequence, an image signal $s$ is regarded as containing a noise-free component $g$ plus superimposed noise $n$:

$$s(x,y,t) = g(x,y,t) + n(x,y,t).\qquad(1)$$

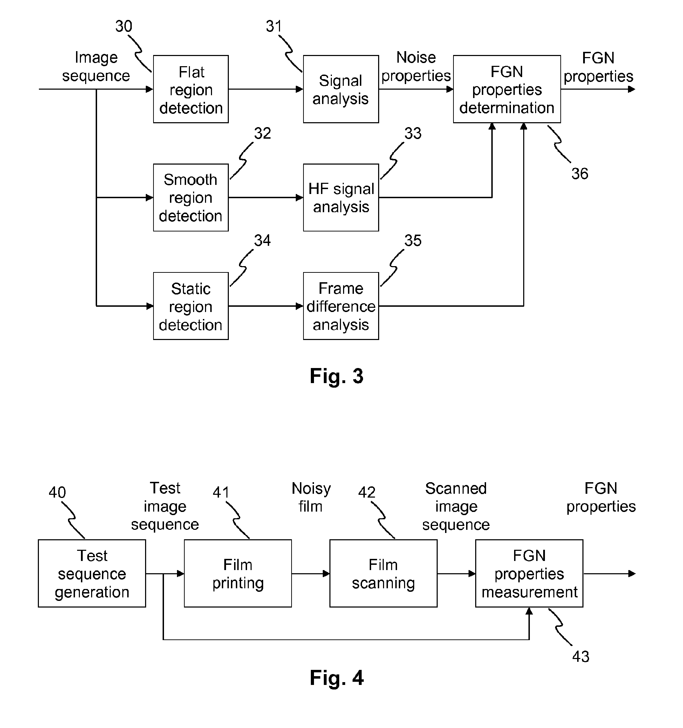

The parameters $x,y,t$ refer to the horizontal, vertical and temporal coordinates of a pixel, respectively, i.e. to its pel/line/frame index. The signal $s$ preferably stands for the R, G, or B component, the same holding for $g$ or $n$. Of course, signal spaces different from RGB may likewise be used, e.g. YUV. The problem is to separate $g$ and $n$, and moreover to separate film grain noise or its properties from other noise components such as sensor noise, which is typically much less in amplitude. In the following several approaches are proposed for tackling this problem. A simplified overall block diagram of determination of film grain noise properties is depicted in Fig. 3. The determination preferably distinguishes between flat image regions, smooth image regions, and static image regions. Some of the properties of film grain noise are obtained by analyzing the image signal in flat image regions containing a constant noise-free signal component $g$ and superimposed noise. Flat image regions are identified 30 either by visual inspection of images, e.g. using a graphical user interface, or by an automatic signal analysis step. The automatic signal analysis step preferably exploits local image variance measures or energy in local Fourier transforms. As a result of identification of flat image regions advantageously a rectangle is defined in an image or in a number of images. In the vicinity of a pixel $(x,y)$ the average $m_{\text{Region}}$ of $s$ over the region is used as an estimate of $g$:

$$g(x,y,t) = m_{\text{Region}}(t) = E[s]_{\text{Region},t}.\qquad(2)$$

Then, noise is the difference between s and $m_{\text{Region}}$ :

$$n(x,y,t) = s(x,y,t) - m_{\text{Region}}(t).\qquad(3)$$

The histogram, spectrum, etc. of the image signal minus the average are evaluated 31 to measure the spatial properties of noise for a certain R/G/B signal level. Doing so for flat regions with different $m_{Region}$ yields noise properties for a wider or even complete image signal range.

The frame differences in static image regions, e.g. identified 34 by a change detection or motion estimation step, are analyzed for measuring temporal properties of noise. In the ideal case of a completely static image region, i.e. zero motion, the frame difference $fd$ of a pixel between the present and the previous frame is equal to the difference of the corresponding noise components, since the noise-free component is identical, i.e. $g(x,y,t) = g(x,y,t-T)$:

$$\begin{aligned} fd(x,y,t) &= s(x,y,t) - s(x,y,t-T)\\ &= n(x,y,t) - n(x,y,t-T). \end{aligned}\qquad(4)$$

The variance of the frame differences is twice the variance of the noise then, or:

$$\sigma_n^2 = \sigma_{fd}^2/2.\qquad(5)$$

The histogram, spectrum, etc. of the frame differences are determined 35 yielding some of the temporal properties of noise for a wide or even complete image signal range.

As a result of the film scanning process, scanned films may show some jerkiness and/or flicker even in case of unmoved image content. The frame differences typically increase due to these effects. Evaluation of the frame differences is advantageously limited to flat or smooth regions of frames with little jerkiness and flicker, thus providing more reliable results in these cases at least for a certain range of image signal levels. Suitable regions are preferably identified, by change detection or (global) motion estimation.

Natural images are hardly flat but just smooth in certain regions. Therefore, remaining very-low-frequency components may be present that affect the measurement results. Removing the influence of very-low-frequency components is done by strong low-pass filtering and subtracting the filter output from the image signal.

The resulting high-frequency signal component in detected 32 smooth regions is analyzed 33 to obtain spatial properties of noise. High frequency here means everything except the very-low frequencies. This approach allows selecting smooth regions that cover a wide image signal range.

A $\cos^2$ filter is applied horizontally and vertically, e.g. with a window size of 39 for 2K or 23 for SD material. The low-pass filter output *m* is used as an estimate of *g*:

$$g(x,y,t) \approx m(x,y,t). \qquad (6)$$

The noise is approximated by the difference of *s* and *m*:

$$n(x,y,t) \approx s(x,y,t) - m(x,y,t). \qquad (7)$$

The histogram, spectrum, etc. of this signal are evaluated to determine spatial properties of the noise.

The results are compared with the evaluation of frame differences in static regions to check and verify the results obtained there. Especially, it is expected that the noise variance is

$$\sigma_n^2 = \sigma_{HF}^2 = \sigma_{fd}^2/2. \qquad (8)$$

The minimum is favorably taken as a practical estimate:

$$\sigma_n^2 = \min\left(\sigma_{HF}^2, \sigma_{fd}^2/2\right). \qquad (9)$$

Image sequences used for measurement of film grain noise may be natural images sequences or artificial test sequences. Natural images sequences may have any spatio-temporal format such as SD, HD, 2K, and 4K, with any file type, number of bits per pixel, signal level scale (lin/log), color/black-and-white, color space, etc. Advantageously, however, in order to obtain reliable film grain noise characteristics as a reference for later film grain noise superimposition, a test sequence is created artificially for investigating film grain noise under defined conditions in the subsequent measurement process. An overall simplified block diagram of the process of measuring the properties of film grain noise using an artificial test sequence is shown in Fig. 4. The sequence covers the complete range of intensity and color in certain steps. After generating 40 the sequence it is printed 41 on some type of film of interest, or a series of films, to be supported by grain management later. The film is then scanned 42, and the film grain noise is investigated 43 by means of the proposed methods.

Since every film image and color layer has its own film grain, every scanned film image and color component has its own film grain noise. The test sequence allows studying both the color dependency of film grain noise, i.e. its individual characteristics for R, G, B, and its intensity dependency, i.e. the film grain noise power as a function of the color signal level. To facilitate film grain noise measurement, parameterization, and modeling, the test sequence advantageously allows investigating a variety of film grain noise properties. Examples of such properties are the characteristics of the histogram, shape and bandwidth of the spectrum, the latter corresponding to the grain size, the strength or power, and the signal dependency, i.e. various characteristics for the film grain noise power as a function of the R/G/B intensity. To this end the test sequence is preferably made of images containing patches of constant intensity and color, but varying between the patches so as to cover the complete intensity and color space.

The choice of intensity and color is advantageously made in a pseudo-random order with the objective of achieving a balanced intensity average throughout the sequence. The size of the patches is chosen such that it allows performing a Fourier transform for analyzing frequency characteristics, and that stable, useful histograms and other results are obtained.

In detail, the test sequence is preferably made of different parts. A first part comprises single-color frames in grey, red, green, blue of various, constant intensity. Each frame is preferably repeated several times to allow studying possible impacts of the later film scanning process.

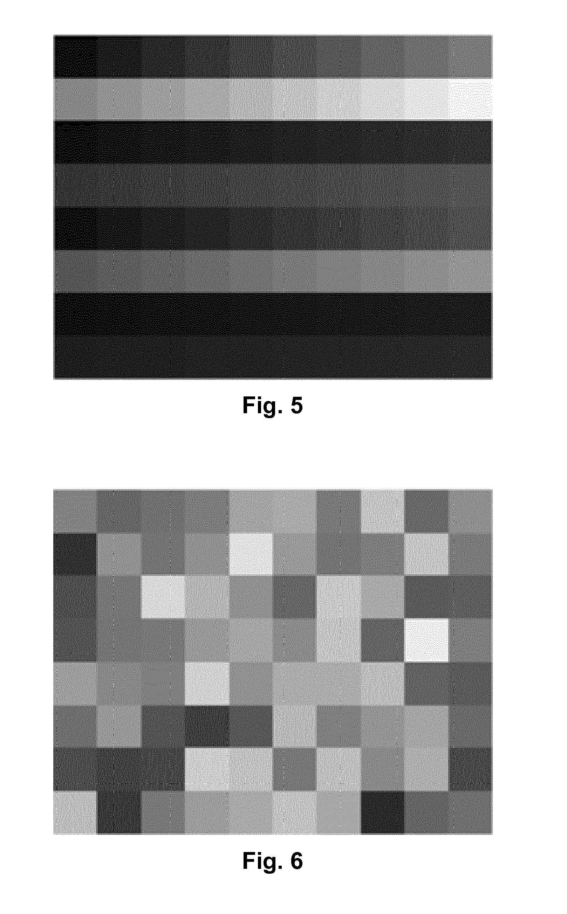

A second part comprises frames containing a few grey, red, green, and blue patches of different intensity, as shown in Fig. 5. Identical frames are favorably repeated several times. The second part covers the complete intensity range by a certain number of representative levels, e.g. 20 levels for an 8- or 10-bit range. Considering three color components or channels, this means 3×20=60 colors. With additional neutral grey this makes 80 colors. In order to allow for 10x8=80 color patches per frame in case of 2K scanned film, each patch has to have about 204 pixels × 194 lines, or 204 pixels × 259 lines in case of 60 colors. This means that one frame can carry all different color patches. This frame is repeated 19 times to always have 20 successive identical frames.

A third part comprises a sequence of frames each containing certain patches of color and intensity, which altogether cover the complete color and intensity space. An example of such a frame is depicted in Fig. 6. The complete intensity range is covered by a certain number of representative levels, e.g. 20 levels for the 8- or 10-bit range. Considering again three color components or channels, this means $20^3$=8000 colors. To allow for 10×8=80 color patches per frame in case of 2K scanned film as above, each patch needs to have about 204 pixels × 194 lines. This results in 8000/80=100 different frames.

The color/intensity levels are distributed across the image sequence in a pseudo-random fashion in order to achieve a fairly constant intensity mean value along the time axis. This minimizes a possible impact of the later scanning process. As above, each of these frames is preferably repeated 19 times to always have 20 successive identical frames. This leads to a sequence of 20×100=2000 frames, or a duration of 80 seconds in case of 25 Hz playback. This is well feasible for the signal processing platforms and film processing facilities that are available today.

Measurement results are analyzed or compared to determine whether the position of the patches on the given film image is relevant. In such case several arrangements of the patches are advantageously realized.

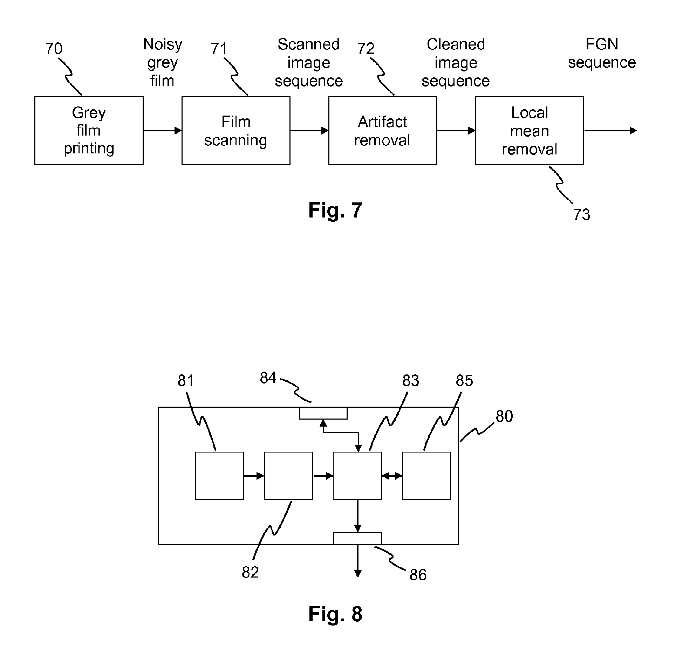

One way to isolate film grain noise from the image signal is to print a natural flat grey image with constant R, G, B values on film and scan the film. The scanned film then might contain the usual film scanning artifacts, such as scratches, dirt, flicker, etc. However, when these can be ignored or removed, the scanned film will also allow to analyze any noise fairly easily for a given signal level, or to use it for film grain noise superimposition. A simplified block diagram of generating a film grain noise sample for film grain noise superimposition is illustrated in Fig. 7. A corresponding apparatus 80 is depicted in Fig. 8.

Film grain noise samples are obtained by printing 70 neutral grey film and subsequently scanning 71 it with a scanner 81, yielding samples $s(x,y,t)$. Artifacts such as scratches, dirt, flicker, etc. are removed 72 electronically with an image processor 82. The (local) mean *value m* of *s* is subtracted 73 by a subtraction stage 83, thus yielding the film grain noise **fgn $(x, y, t)$ :**

$$\mathrm{fgn}(x, y, t) = s(x, y, t) - m. \qquad (10)$$

Mean value computation and subtraction is done, preferably individually and independently for the color components, in one or more of the following ways depending on the result of the film scanning. A first way is to determine the mean value over the complete image and to subtract it from the image signal of each picture element. A second way consists in removing a column average if there is a slight change in the grey value intensity across the image from left to right. A third way comprises performing 2D filtering for deriving local mean values and subtracting them as described above. For 2D filtering a squared-cosine window of a user-selectable, typically large size is advantageously used. For this purpose the apparatus 80 preferably has a user interface 84.

Depending on the film, the film grain noise will be more or less strong, and may be different for each of the color components or channels R, G, B. With the above described three-part test sequence film grain noise samples can be obtained, which differ for different color components and signal level. From these, depending on the film, the film grain noise will not only be more or less strong, but also have different characteristics $\sigma^2_{\mathrm{fgn}}\big(g(x,y,t)\big)$ of power versus signal level for each of the color components or channels R, G, B. These characteristics are favorably obtained by determining the variances individually for each of the 2-dimensional color patches contained in the test sequence with their specified individual color and signal levels, and then interpolating between the results obtained at these given signal levels.

In any case the obtained film grain noise samples are advantageously made stored on a local storage 85 or made available via an output 86. Of course, the various units of the apparatus 80 may likewise be combined or partially combined into a single unit or implemented as software running on a processor.

For understanding important properties of film grain noise, results of histogram and spectrum analysis of image signals, frame differences and high-frequency components in flat or smooth image regions or for complete static images have been investigated using natural image sequences. A summary of the results is given in the following.

As expected, different types of films show different film grain noise characteristics. This was confirmed by the investigations carried out with a number of SD, 2K/HD, and 4K test sequences. The image signal variance and frame difference variance vary strongly between the sequences, differ between R, G and B, and generally increase with increasing signal level. For some film types this increase is rather linear, for some film types a saturation is observed. However, other film types show a rather constant variance, some even a decreasing variance, some an increasing and decreasing variance.

In flat static regions the frame difference (**fd**) variance is often similar to or greater than the image signal variance, so that the flat-region **fd** variance is a good indication of noise. In the ideal case of purely static regions, the **fd** variance is in theory twice the noise variance. **fd** histograms are typically peaked or Gaussian-like. The blue component often contains most noise, but not always.

Camera recordings contain sensor noise only. The noise variance is low and constant versus the signal level. The histogram is Gaussian.

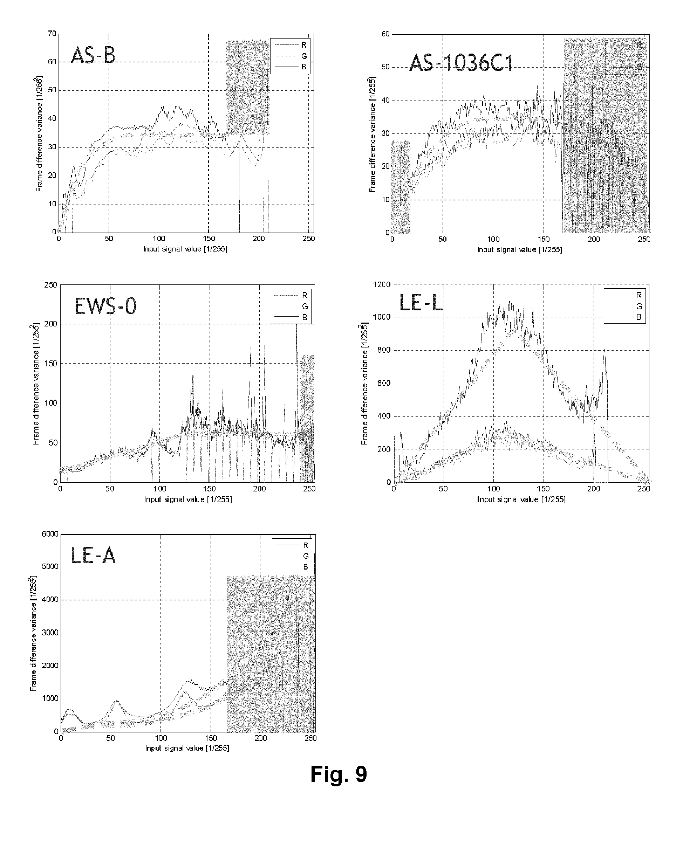

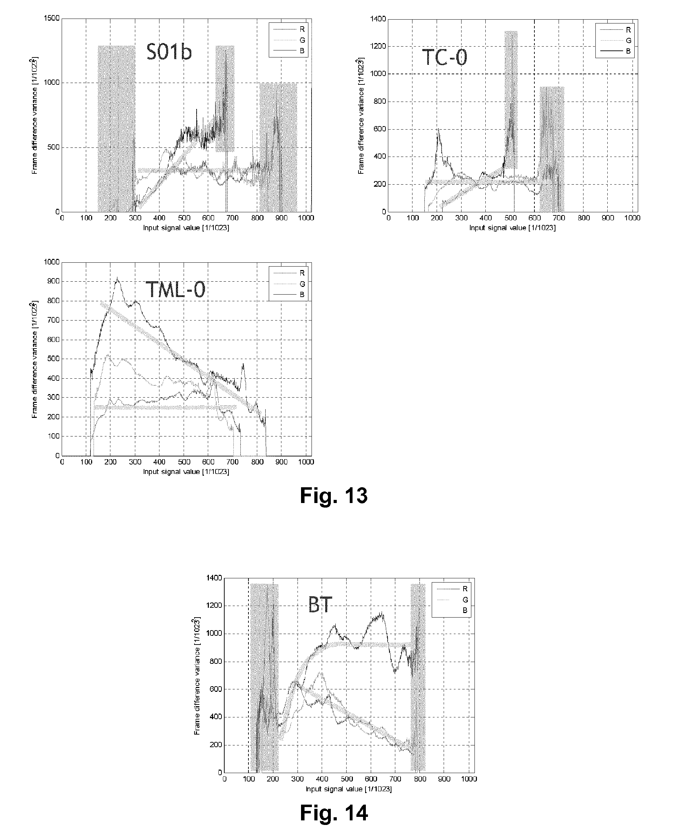

Very interesting for the film grain noise appearance is the dependence of the noise variance on the image signal level. For some of the SD, 2K/HD, and 4K sequences, Figs. 9 to 14 provide representative graphs of the **fd** variance as a function of s for the R, G, and B components along with very rough approximations as a first step towards deriving model functions. Note that where the relation of the **fd** variances of R, G, and B changes along the **s** axis this corresponds to a change in the color of the film grain noise impression between dark, medium, and light image regions. This will hold especially for the graphs of the 2K and 4K sequences S01b, TC, TML and BT shown in Fig. 13 and 14.

Figs. 9 to 11 show some representative graphs of variance of frame differences as a function of image signal level for SD sequences along with rough approximations.

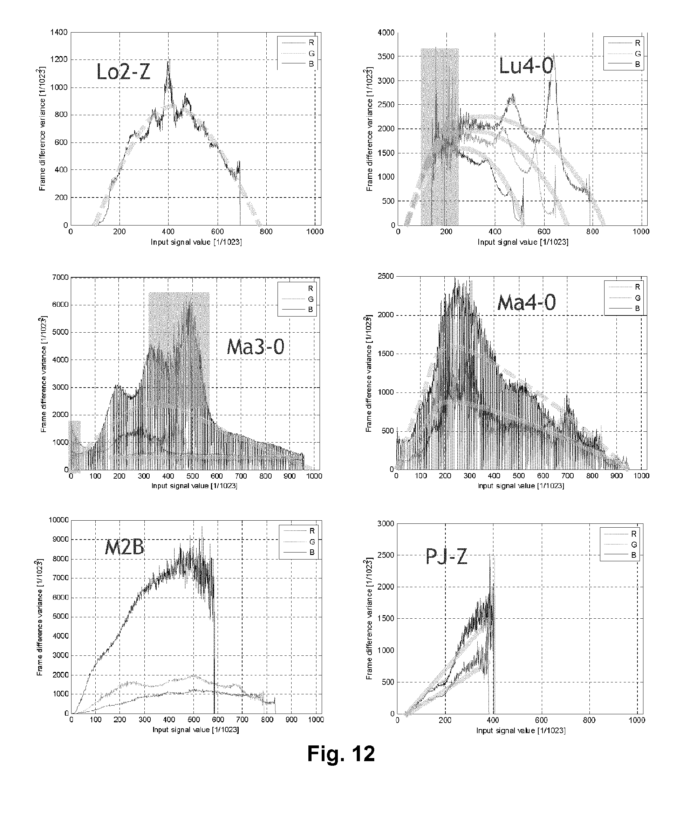

Figs. 12 and 13 show some representative graphs of variance of frame differences as a function of image signal level for 2K/HD sequences along with rough approximations.

Fig. 14 shows a representative graph of variance of frame differences as a function of image signal level for a 4K sequence along with a rough approximation.

From the characteristics $\sigma_{\mathrm{fgn}}^2(g)$ of film grain noise power versus signal level, for each of the color components or channels R, G, B, the film grain noise superimposition characteristics as a signal-dependent multiplier **v(g)** are derived as follows:

$$v(g) = \sigma_{\mathrm{fgn}}(g) = \sqrt{\sigma_{\mathrm{fgn}}^2(g)}. \qquad (11)$$

The diagrams of **fd** variance as a function of **s** shown in Figs. 9 to 14 also depict rough approximations of the measured data. The measured functions $\sigma_{fd}^2(s)$ are approximated by simple mathematical functions and halved to obtain $\sigma_{\mathrm{fgn}}^2(g)$. A limited set of classes of simple mathematical functions with a limited number of free parameters is used. These functions include parabolae, higher-order polynomials, exponential functions, linear function, or combinations thereof. Examples of such approximations will be discussed in the following. Approximation may be done automatically, e.g. by regression methods, or human-assisted for different functions. Selection of a function of one of the classes is preferably done by comparing the deviation between approximated and measured data. This is done, for example, by evaluating the error energy of approximated and measured data between the classes and selecting the class with the lowest error energy, or by human-assisted visual inspection of the curves and selecting the class that appears most appropriate.

For some sequences or films, approximation by a simple quadratic parabola is appropriate:

$$\sigma_{fd}^2 = \max(0, a \cdot s^2 + b \cdot s + c). \qquad (12)$$

Examples are the 2K/HD sequences Lo2-Z, Lu4-0, and M2B shown in Fig. 12.

For other sequences or films an approximation by a combination of an exponential and a linear term is appropriate:

$$\sigma_{fd}^2 = \left(\sigma_{fd,0}^2/c\right) \cdot (1 - \exp(-a \cdot s) - b \cdot s). \qquad (13)$$

Examples are the 2K/HD sequences Ma4-0 and TML-0 shown in Figs. 12 and 13.

The exponential term dominates for low values of *s,* the linear term dominates the shape for larger values of *s* where the exponential term has already reached its saturation. The function has a first zero crossings at *s = 0.* The position of the second zero crossing is controlled by the value of *a.* The position of the peak is controlled by proper choice of *b.* The function is normalized by *c* as to guarantee the chosen value of $\sigma^2_{fd,0}$ . Hence, *b* and $\sigma^2_{fd,0}$ are the only parameters needed to control the shape of such a curve.

The above approach can be somewhat altered and simplified, in terms of parameters, to:

$$\sigma^2_{fd} = a \cdot (1 - s)\big(1 - \exp(-b \cdot s)\big). \qquad (14)$$

Again the exponential term dominates for low values of *s,* the linear term dominates the shape for larger values of *s* where the exponential term has already reached its saturation. The function has zero crossings at *s = 0* and *s = 1.* The position of the peak is controlled by proper choice of *b.*

For yet other sequences or films, approximation by exponential functions is appropriate, rising for low *s,* falling for high *s:*

$$\sigma^2_{fd} = a \cdot \big(1 - \exp(-b \cdot s)\big). \qquad (15)$$

An example is the SD sequence AS-1036C1 shown in Fig. 9.

For some sequences or films, approximation by straight lines is appropriate, rising for low *s,* falling for high *s:*

$$\sigma^2_{fd} = \min(a \cdot s + b, c \cdot s + d, e \cdot (1 - s) + f). \qquad (16)$$

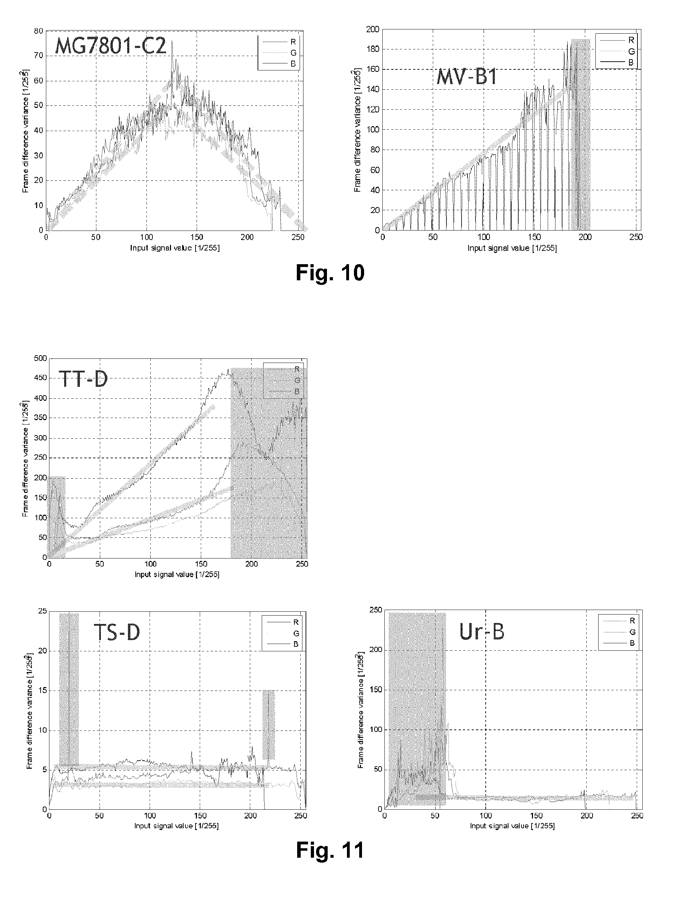

Examples are the SD sequences EWS-0, MG7801-C2, and MV-B1 shown in Figs. 9 and 10 and the 2K/HD sequence PJ-Z shown in Fig. 12.

A further solution is an approximation by a straight line with an exponential roll-off:

$$\sigma^2_{fd} = a \cdot s \cdot \Big(1 - \exp\big(-b(1 - s)\big)\Big). \qquad (17)$$

The exponential term in parentheses is just a multiplier that serves to influence the shape of the function only near *s = 1,* forcing it down to zero. Hence, the function has zero crossings at *s = 0* and *s = 1.* The linear term dominates for low to large values of *s.* The position of the peak is controlled by proper choice of *b.* The choice of the parameter *b* allows achieving a very long linear range.

Examples are the SD sequences MG7801-C2, MV-B1, and TT-D shown in Figs. 10 and 11 and again the 2K/HD sequence PJ-Z shown in Fig. 12.

Still a further possibility is an approximation by a parabola with an exponential roll-off:

$$\sigma^2_{fd} = a \cdot (s^2 + b \cdot s) \cdot \Big(1 - \exp\big(-c \cdot (1 - s)\big)\Big). \qquad (18)$$

The exponential term in parentheses is just a multiplier that serves to influence the shape of the curve only near *s = 1,* forcing the function down to zero. Hence, the function has zero crossings at *s = 0* and *s = 1.* The quadratic term dominates for low to large values of *s.* The choice of the parameter *b* allows achieving a very long quadratic range.

Examples are the SD sequence LE-A shown in Fig. 9 and again the 2K/HD sequence PJ-Z shown in Fig. 12.

In the following some further details of the results of film grain noise measurement shall be discussed. For understanding important properties of film grain noise, results of histogram and spectrum analysis of image signals, frame differences and high-frequency components in flat or smooth image regions or for complete static images have been investigated.

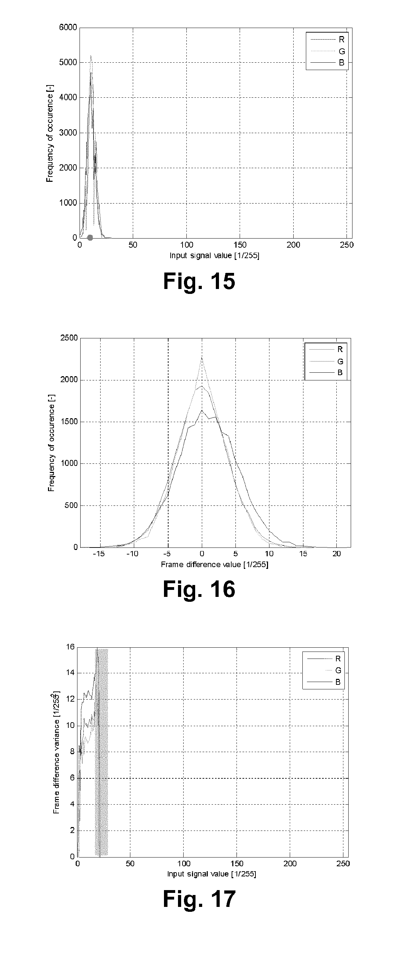

The image signal itself in flat regions is considered as an approximation of the noise contained in the image, since ideally flat regions show a constant noise-free component, and deviations from it are just noise. Fig. 15 shows an example for the sequence AS1036-C1 in a nearly flat region "M". The supposed noise-free signal value $g$ (mean value) is depicted by a grey circle. The curves then provide an estimate of the histogram of the noise signal $n$ around this center or $n = 0$ value.

Insight into temporal properties of the noise are provided by evaluating the frame differences in static regions. Fig. 16 shows the $fd$ histogram for the sequence AS1036-C1 in the region M again. It looks a bit Gaussian-like and differs for the R, G, and B components. A larger number of evaluated samples will lead to smoother histogram curves, which is more appropriate for modeling.

Since the frame differences ideally are the differences between the noise components in two successive frames, half their variance is an indication of the noise variance.

Fig. 17 shows the variance of the frame differences as a function of the image signal level for the R, G, and B components of the sequence AS1036-C1 in region M. Peaks in such a representation typically occur at signal levels with low probability. They are therefore neglected in the evaluation. In the figure they are thus hidden by a grey shade.

Both the signal and $fd$ variances are low in this example, and highest for the B component.

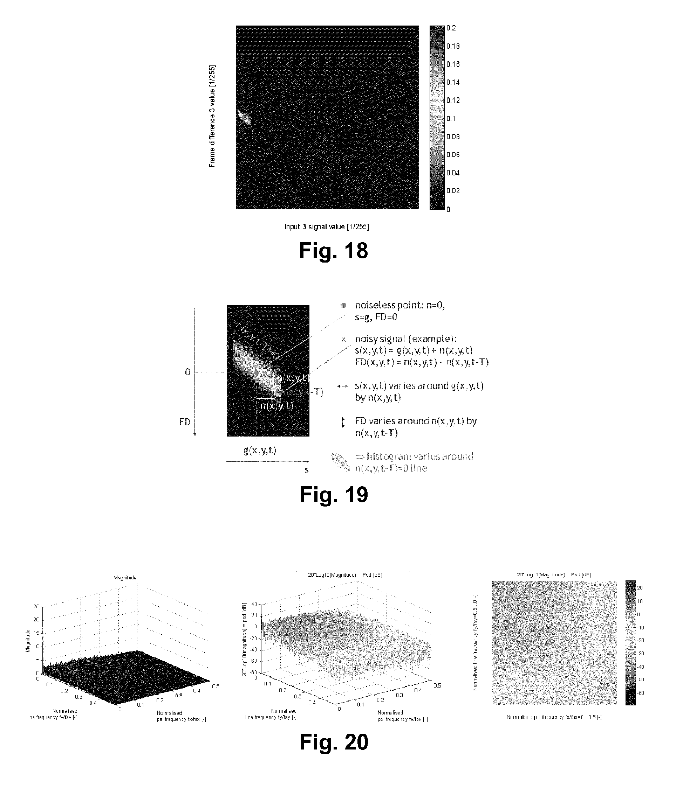

Fig. 18 provides a look at the grey-value-coded histogram of the frame differences as a function of the image signal for the B component of the sequence AS1036-C1 in region M. The grey circle again depicts the supposed noise-free signal case. The deviations around it nicely show the variations of the image signal and the frame differences. By computing the variances in vertical direction one gets to Fig. 17.

A closer look at the histogram representation of Fig. 18 is provided by Fig. 19, which shows how to "read" the diagram. $s$ and $fd,$ respectively, vary around the "noiseless point" ($s = g, fd = 0,$ grey circle). A certain measurement point or example of a combination of $s$ and $fd$ values is depicted by the grey "x". Since $s(x, y, t) = g(x, y, t) + n(x, y, t),$ the "x" is shifted by $n(x, y, t)$ along the $s$-axis with respect to the circle at $g(x,y,t)$. Since $fd(x,y,t) = n(x,y,t) - n(x,y,t-T),$ the "x" is shifted by $n(x,y,t)$ and $- n(x, y, t - T)$ along the $fd$-axis with respect to the grey circle. As a result, the complete histogram appears as a sheared rectangle in the $fd$-vs.-$s$ plane.

In image sequences containing several flat or constant regions, the resulting histogram diagrams will be made of several such sheared rectangles or "ellipses". In image sequences containing lots of textures and colors, maybe covering the complete signal range, such "ellipses" will overlap to form a continuum.

In order to also understand frequency-domain properties of film grain noise, spectra are evaluated by Fourier transforming the image signal, frame differences, or high-frequency components.

As an example, Fig. 20 shows the magnitude of the Fourier transform of the frame differences as a function of normalized horizontal and vertical frequencies $f_x/f_{sx}$, $f_y/f_{sy}$ for the B component in a region "A" of a 2K sequence of scanned neutral-grey film in different representations: 3D with linear magnitude scale, 3D with logarithmic magnitude scale, and 2D grey-value-coded logarithm of magnitude.

In this example the spectrum is pretty flat (around 0 dB) apart from some peak at (0,0) and circular in shape up to a normalized frequency of about 0.3, then has some roll-off, and is about flat (around -20 dB) beyond a normalized frequency of about 0.45. The flat part with the roll-off accounts for film grain noise, while the flat high-frequency range results from sensor noise, which is typically white.

The shape and bandwidth of the spectra were analyzed by exploiting traditional signal processing methods, e.g. regression. They are approximated, for example, by a flat spectrum and a linear roll-off, which are described and quantified by a low number of parameters such as rectangular or circular or elliptic shape, bandwidth in x and y where the linear roll-of starts, where it ends, and at which level it ends.

One way to isolate film grain noise from the image signal is to print a natural flat grey image with constant R, G, B values on film and scan the film. The scanned film then might contain the usual film scanning artifacts, such as scratches, dirt, flicker, etc., but will also allow to analyze any noise fairly easily for a given signal level.

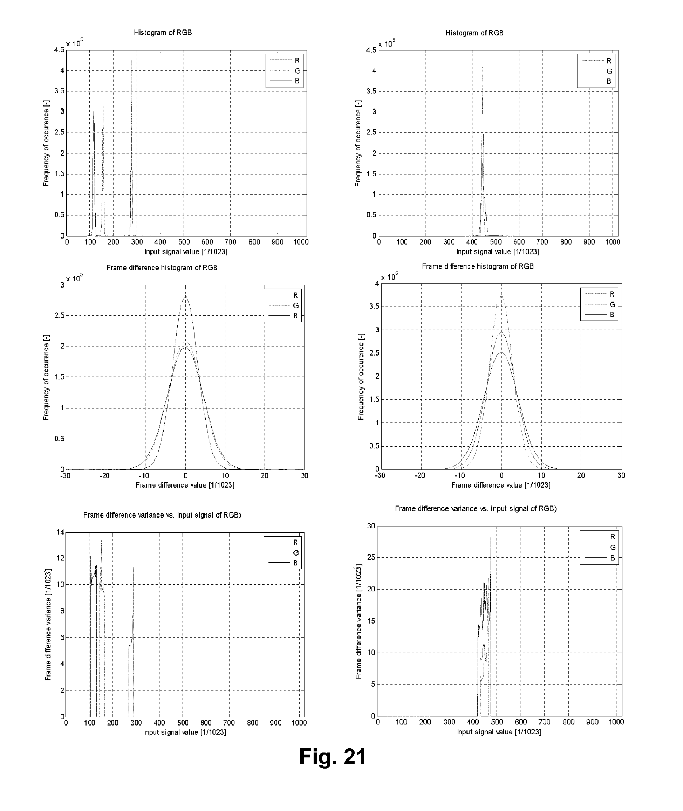

Fig. 21 shows histograms of the image signal and the frame differences as well as the variance of the frame differences as a function of the image signal level for selected regions of scanned natural grey films in SD (left side of Fig. 21) and 2K (right side of Fig. 21) resolution. The histogram of the image signal indicates the histogram of the film grain noise recorded in the spatial domain, offset by the mean value of R, G, or B, respectively. The histogram of the frame differences indicates the histogram of the film grain noise recorded in the temporal domain, considering that the frame difference variance is twice the noise variance. The histograms are pretty narrow in this example. The histograms of the frame differences are Gaussian-like in shape, the R, G, and B components having different noise power. The B component has the highest variance in both resolutions. While in the SD sequence the R component has the least noise, in the 2K sequence it is the G component.

For the 2K sequence the spectra look circular in the frequency plane and are pretty flat up to a normalized frequency of about 0.25 the sampling frequency. This value may however be slightly different for the R, G, and B components. There then follows a smooth roll-off, which is almost linear on the logarithmic scale, until about 0.4 $f_s$. Beyond that the spectra are white. The B spectrum may be a little less flat. The noise floor at high frequencies is considered to represent sensor noise resulting, for example, from the film scanning sensor or another sensor involved in the production and processing history of the test material. The image signal spectra show some energy along the frequency axes which are not attributed to film grain noise and should be ignored. They do not appear in the spectra of the frame differences.

Since the spectra of the 2K sequence are pretty flat up to about 0.25 the 2K sampling frequency $f_{s,2K}$, it does not surprise that the spectra of the SD sequence are virtually white over the complete frequency range, i.e. up to about 0.5 the SD sampling frequency $f_{s,SD}$, which is about a third of $f_{s,2K}$ in x and y due to the relation of SD and 2K formats, i.e., 720×540 versus 2048x1556. The content, however, of the sequences in SD and 2K is somewhat different, so it needs to be checked whether the underlying film type is different, too.

Note that the grain sizes of the film's color layers will determine the cut-off frequencies or bandwidths of the film grain noise in the scanned film. When scanning one and the same film in 2K resolution the normalized cut-off frequency will be twice as high as if scanning the same film in 4K resolution, and it will again be about three times as high when scanning it with SD resolution.

Optimum conditions for investigating film grain noise in natural film sequences would mean static image content covering the complete signal range, no flicker, no other artifacts, etc. Natural sequences usually do not offer such optimum conditions. In order to obtain reliable results, evaluation was attempted to be concentrated on frames that are at least nearly static, i.e. without jerkiness, with image areas without object motion and with a signal range as wide as possible. In the following results will be presented for a selection of SD, 2K/HD and 4K sequences.

In the selected SD sequence film grain noise appears low in very dark and very light regions and strongest throughout medium regions. It appears fairly neutral in color throughout the complete intensity range.

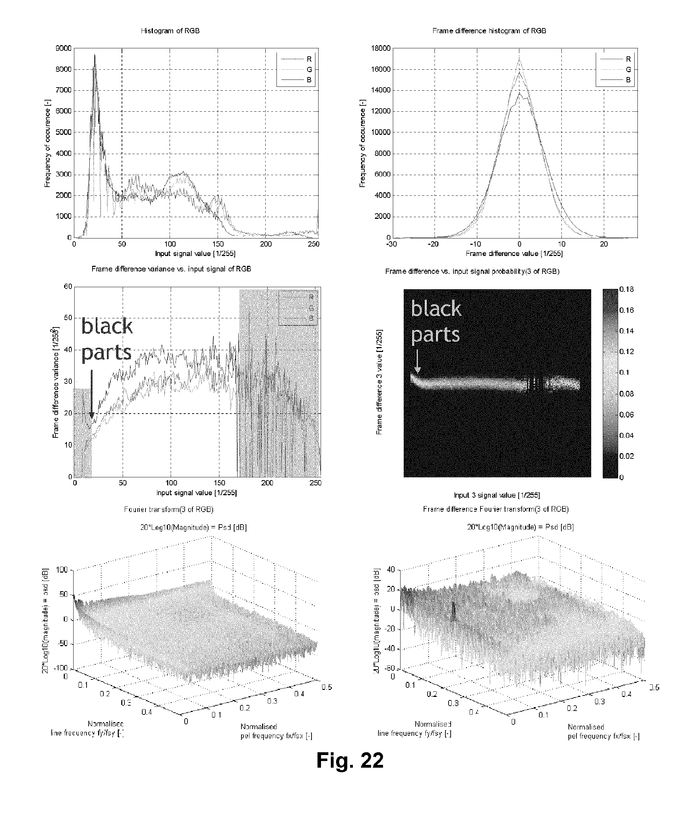

Fig. 22 shows some evaluation results for a selected static frame of the SD sequence, which contains a broad range of RGB values. The larger portion of black parts leads to the depicted special shapes in the histograms. The *fd* variance increases almost exponentially with the image signal *s*, then stays constant, and seems to decrease again towards high *s*. Signal ranges with a low number of entries in the histogram mean less reliable results, so they have been shaded in grey.

The film grain noise spectrum is pretty flat and quadratic in shape with cut-off frequencies of about 0.43 times the horizontal and vertical sampling frequencies, respectively. Interestingly, there are two "holes" present in the spectra around about (1/3 $f_{sx}$, 1/8 $f_{sy}$) and (1/3 $f_{sx}$, 3/8 $f_{sy}$). Note that 0.43 $f_{sx}$ is near the PAL sound carrier frequency of 5.5 MHz, 1/3 $f_{sx}$ is about the PAL colour sub-carrier frequency of 4.43 MHz, and the "hole" radius is about the PAL colour bandwidth of 1.3 MHz. These features might therefore have been introduced as a result of some PAL processing somewhere in the lifetime of the sequence.

In general the shape of the *fd* variance as a function of *s* is very different between different SD sequences and may also differ significantly between R, G, and B. For some sequences or components the *fd* variance increases linearly with *s*, for others it shows an exponential or parabolic increases, again for other sequences it decreases with *s*, or increases and then decreases.

Also the level of the variance of *fd* and HF and hence noise differs a lot. For some sequences the R component has the highest amount of film grain noise, for other sequences it is the B component.

The *fd* and HF spectra and thus the film grain noise spectra of SD sequences are in general almost white, covering the complete frequency range.

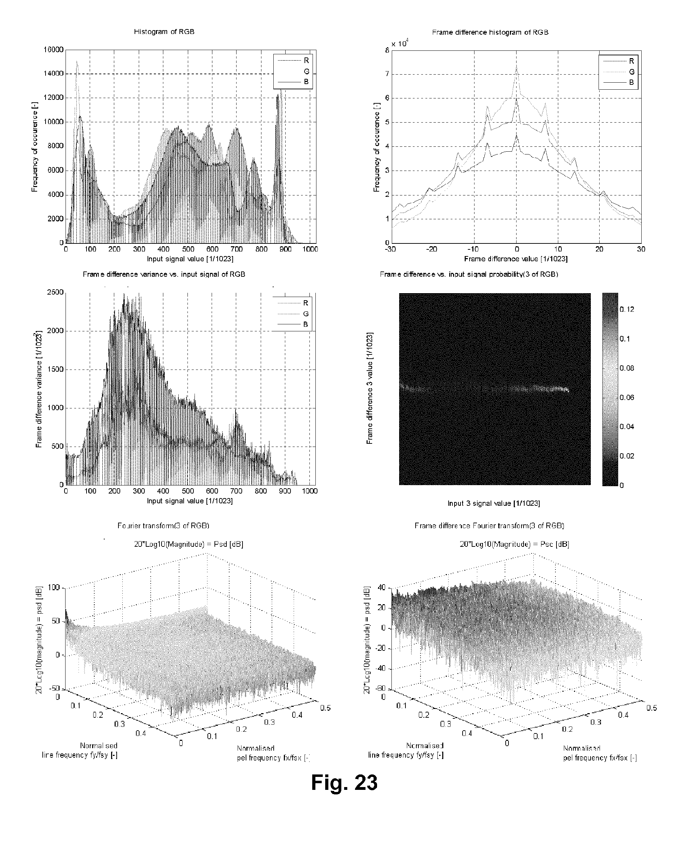

Fig. 23 shows some evaluation results for the selected 2K/HD color sequence. The image signal histograms for a complete image with a little motion cover almost the complete range of RGB values, with peaks for more frequent color values. There are notches in the RGB histograms with a spacing of 7/1023. The *fd* histograms are rather Gaussian-like, with little needles also spaced 7/1023 apart. The *fd* variance first increases and then decreases with increasing s. The noise is strongest for the B component. The *fd* spectra are somewhat circular.

In general the shape of the *fd* variance as a function of *s* is, as with the SD sequences, very different between the various 2K/HD sequences and may also differ significantly between R, G, and B. For some sequences or components the *fd* variance increases linearly with *s*, for others it increases and then decreases, again for other sequences it decreases with *s*.

Also the level of the variance of *fd* and HF and hence noise differs a lot. For some sequences the R component has the highest amount of film grain noise, for other sequences it is the B component.

The *fd* and HF spectra and thus the film grain noise spectra of 2K/HD sequences are often circular and flat up to a certain frequency, e.g. 0.3 $f_s$, and have a smooth roll-off up to another frequency close to 0.5 $f_s$, and then beyond that are constant. Others are somewhat triangular along the frequency axis on a logarithmic magnitude scale. Again others cover almost the complete frequency range.

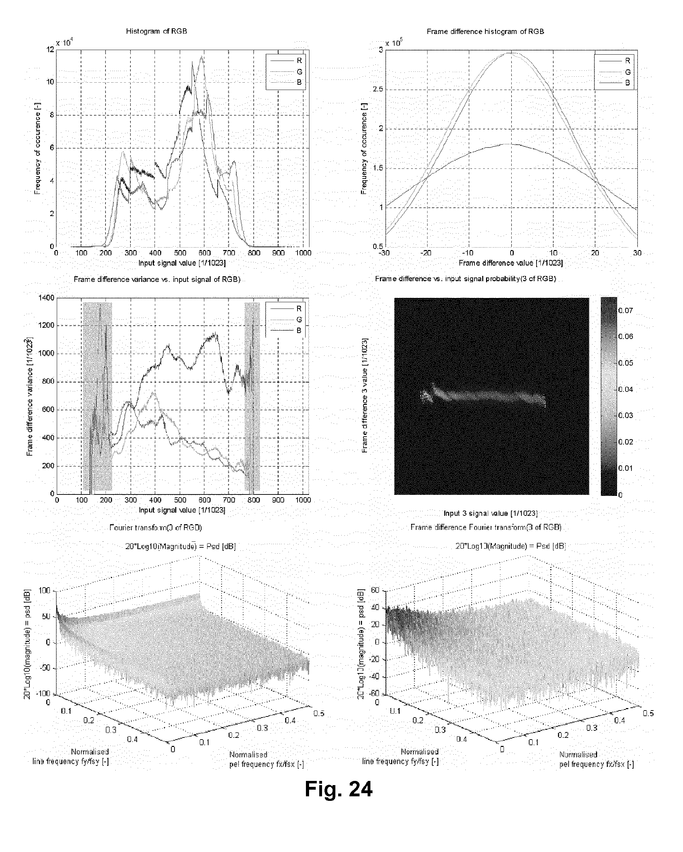

Some evaluation results for the selected 4K sequence are shown in Fig. 24. The sequence is somewhat pale, so an S curve has to be applied for a log-lin signal level mapping to achieve a natural impression on a display. Film grain noise is somewhat balanced, maybe slightly stronger in darker than in lighter regions.

The image signal histograms for a nearly static complete image cover a wide range of RGB values, with larger contributions by light areas of the image. The *fd* histograms are pretty Gaussian-like. The *fd* variance of the B component rather increases with increasing *s* in this interval, while for R and G it rather decreases or increases and then decreases. The noise is strongest for the B component. The *fd* spectra are pretty circular. They are flat only very near (0,0), then have a long roll-off up to about 0.3 $f_s$, and are again pretty flat beyond.

Observations regarding the histograms are in line with some of the other sequences. The circular 4K *fd* and HF spectra have a smaller cut-off frequency compared to 2K due to the higher sampling density in the film scanning process.

Although the invention has been described hereinabove with reference to a specific embodiment, it is not limited to this embodiment and no doubt further alternatives will occur to the skilled person that lie within the scope of the invention as claimed.

**Claims**

1. A method for generating a noise profile of film grain noise in an image sequence, the method comprising:

   - retrieving (10) an image sequence;
   - determining (11) image regions in the image sequence suitable for measuring noise properties;
   - measuring (12) noise properties in the determined image regions; and
   - determining (13) a noise profile from the measured noise properties;

   **characterized in that** the image regions in the image sequence suitable for measuring noise properties are single-color images, flat regions in an image containing a constant noise-free signal component and superimposed noise, smooth regions in an image containing low-frequency signal components and superimposed noise, or static regions of an image showing no motion relative to a temporally adjacent image, **in that** the measured noise properties comprise spatial or temporal properties in dependence of signal levels of image channels, shape of noise spectra, or bandwidth of noise spectra, and **in that** the noise profile comprises parameters of functions used for describing the measured noise properties for an image.

2. The method according to claim 1, **wherein** the image sequence is a sequence of scanned test patterns.

3. The method according to one of the preceding claims, **wherein** the noise properties are derived from measured properties of the image signal, from measured properties of frame differences, or from measured properties of high-frequency components of the image signal.

4. The method according to claim 5 or 6, **wherein** the image channels are RGB or YUV channels.

5. The method according to claim 5 or 6, **wherein** the spectra are evaluated by Fourier-transforming an image signal, by Fourier-transforming frame differences, or by Fourier-transforming high-frequency components of the image signal.

6. The method according to one of the preceding claims, **wherein** the parameters of the noise profile are determined (13) from the measured noise properties by fitting functions selected from classes of functions to noise properties in the form of a variance of frame differences as a function of image signal.

7. The method according to claim 9, **wherein** the classes of functions comprise at least one of parabolae, higher-order polynomials, exponential functions, linear functions, or combinations thereof.

8. An apparatus (20) configured to generate a noise profile of film grain noise in an image sequence, the apparatus (20) comprising:

   - an input (21) configured to retrieve (10) an image sequence;
   - an image analyzer (22) configured to determine (11) image regions in the image sequence suitable for measuring noise properties;
   - a noise analyzer (23) configured to measure (12) noise properties in the determined image regions; and
   - a profile generator (24) configured to determine (13) a noise profile from the measured noise properties;

**characterized in that** the image regions in the image sequence suitable for measuring noise properties are single-color images, flat regions in an image containing a constant noise-free signal component and superimposed noise, smooth regions in an image containing low-frequency signal components and superimposed noise, or static regions of an image showing no motion relative to a temporally adjacent image, **in that** the measured noise properties comprise spatial or temporal properties in dependence of signal levels of image channels, shape of noise spectra, or bandwidth of noise spectra, and **in that** the noise profile comprises parameters of functions used for describing the measured noise properties for an image.

9. A computer readable storage medium having stored therein instructions enabling generating a noise profile of film grain noise in an image sequence, which when executed by a computer, cause the computer to:

- retrieve (10) an image sequence;
- determine (11) image regions in the image sequence suitable for measuring noise properties;
- measure (12) noise properties in the determined image regions; and
- determine (13) a noise profile from the measured noise properties;

**characterized in that** the image regions in the image sequence suitable for measuring noise properties are single-color images, flat regions in an image containing a constant noise-free signal component and superimposed noise, smooth regions in an image containing low-frequency signal components and superimposed noise, or static regions of an image showing no motion relative to a temporally adjacent image, **in that** the measured noise properties comprise spatial or temporal properties in dependence of signal levels of image channels, shape of noise spectra, or bandwidth of noise spectra, and **in that** the noise profile comprises parameters of functions used for describing the measured noise properties for an image.

```
┌─────────────────────┐
│      Retrieve       │  ⌇ 10
│   image sequence    │
└─────────────────────┘
           │
           ▼
┌─────────────────────┐
│ Determine regions for│  ⌇ 11
│measuring noise properties│
└─────────────────────┘
           │
           ▼
┌─────────────────────┐
│   Measure noise     │  ⌇ 12
│     properties      │
└─────────────────────┘
           │
           ▼
┌─────────────────────┐
│Determine noise profile│  ⌇ 13
│ from noise properties │
└─────────────────────┘
           │
           ▼
┌─────────────────────┐
│   Store or output   │  ⌇ 14
│    noise profile    │
└─────────────────────┘
```

**Fig. 1**

**Fig. 2**

30

Image sequence → | Flat region detection | 31 → | Signal analysis | → Noise properties → | FGN properties determination | → FGN properties

32 → | Smooth region detection | 33 → | HF signal analysis |

36

34 → | Static region detection | 35 → | Frame difference analysis |

**Fig. 3**

40 | Test sequence generation | → Test image sequence → 41 | Film printing | → Noisy film → 42 | Film scanning | → Scanned image sequence → | FGN properties measurement | → FGN properties

43

**Fig. 4**

**Fig. 5**

**Fig. 6**

70     Noisy    71     Scanned    72     Cleaned    FGN
grey      image       image       sequence
film       sequence    sequence

| Grey film printing | → | Film scanning | → | Artifact removal | → | Local mean removal | → |

73

**Fig. 7**

| 81 | 84 | 83 | 85 |

80

82

86

**Fig. 8**

Fig. 9

**Fig. 10**

**Fig. 11**

**Fig. 12**

**Fig. 13**

**Fig. 14**

**Fig. 15**

**Fig. 16**

**Fig. 17**

**Fig. 18**

noiseless point: n=0,
s=g, FD=0

x noisy signal (example):
s(x,y,t) = g(x,y,t) + n(x,y,t)
FD(x,y,t) = n(x,y,t) - n(x,y,t-T)

↔ s(x,y,t) varies around g(x,y,t)
by n(x,y,t)

↕ FD varies around n(x,y,t) by
n(x,y,t-T)

⇒ histogram varies around
n(x,y,t-T)=0 line

**Fig. 19**

**Fig. 20**

Fig. 21

**Fig. 22**

Fig. 23

**Fig. 24**

Application Number

EP 14 16 8645

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PETER SCHALLAUER ET AL: "Rapid and Reliable Detection of Film Grain Noise", IMAGE PROCESSING, 2006 IEEE INTERNATIONAL CONFERENCE ON, IEEE, PI, 1 October 2006 (2006-10-01), pages 413-416, XP031048661, ISBN: 978-1-4244-0480-3 * the whole document * | 1-9 | INV. G06T5/00 |
| Y | BYUNG TAE OH ET AL: "Advanced Film Grain Noise Extraction and Synthesis for High-Definition Video Coding", IEEE TRANSACTIONS ON CIRCUITS AND SYSTEMS FOR VIDEO TECHNOLOGY, IEEE SERVICE CENTER, PISCATAWAY, NJ, US, vol. 19, no. 12, 1 December 2009 (2009-12-01), pages 1717-1729, XP011281921, ISSN: 1051-8215, DOI: 10.1109/TCSVT.2009.2026974 * abstract * * section III * | 1-4,6-9 | |
| Y | WARP RICHARD J ET AL: "Quantitative evaluation of noise reduction strategies in dual-energy imaging", MEDICAL PHYSICS, AIP, MELVILLE, NY, US, vol. 30, no. 2, 1 February 2003 (2003-02-01), pages 190-198, XP012011982, ISSN: 0094-2405, DOI: 10.1118/1.1538232 ISBN: 978-1-930524-56-9 * abstract * * sections II, III * | 1-3,5,8, 9 | TECHNICAL FIELDS SEARCHED (IPC) G06T |
| Y,D | US 5 641 596 A (GRAY ROBERT T [US] ET AL) 24 June 1997 (1997-06-24) * column 2 - column 3 * | 2 | |

-/--

The present search report has been drawn up for all claims

| Place of search | Date of completion of the search | Examiner |
|---|---|---|
| Munich | 31 October 2014 | Katartzis, Antonios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 16 8645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 0 957 367 A1 (THOMSON MULTIMEDIA SA [FR]) 17 November 1999 (1999-11-17) * the whole document * | 1-9 | |
| Y | EP 2 413 586 A1 (SONY CORP [JP]) 1 February 2012 (2012-02-01) * abstract * * column 5 - column 10 * | 1-9 | |
| A | Gregory Ng: "Noise Characterization of Consumer Digital Camera", , 30 April 2011 (2011-04-30), XP055086573, Stanford University Retrieved from the Internet: URL:https://web.archive.org/web/20110430010043/http://scien.stanford.edu/pages/labsite/2005/psych221/projects/05/gregng/index.html [retrieved on 2013-11-04] * page 3 * | 1-9 | |
| A,D | US 2002/034337 A1 (SHEKTER JONATHAN MARTIN [CA]) 21 March 2002 (2002-03-21) * the whole document * | 1-9 | TECHNICAL FIELDS SEARCHED (IPC) |
| A | COLLIS B ET AL: "Synthesising film grain", 1ST EUROPEAN CONFERENCE ON VISUAL MEDIA PRODUCTION, IEE, GB, 1 January 2004 (2004-01-01), pages 231-234, XP008102092, ISBN: 978-0-86341-391-9 * the whole document * | 1-9 | |

The present search report has been drawn up for all claims

| Place of search | Date of completion of the search | Examiner |
|---|---|---|
| Munich | 31 October 2014 | Katartzis, Antonios |

EPO FORM 1503 03.82 (P04C01)

## ANNEX TO THE EUROPEAN SEARCH REPORT
## ON EUROPEAN PATENT APPLICATION NO.

EP 14 16 8645

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2014

| Patent document cited in search report | | | Publication date | Patent family member(s) | | | Publication date |
|---|---|---|---|---|---|---|---|
| US 5641596 | A | | 24-06-1997 | NONE | | | |
| EP 0957367 | A1 | | 17-11-1999 | CN | 1236107 | A | 24-11-1999 |
| | | | | EP | 0957367 | A1 | 17-11-1999 |
| | | | | JP | 4463341 | B2 | 19-05-2010 |
| | | | | JP | 2000069487 | A | 03-03-2000 |
| | | | | US | 6307888 | B1 | 23-10-2001 |
| EP 2413586 | A1 | | 01-02-2012 | CN | 102348047 | A | 08-02-2012 |
| | | | | EP | 2413586 | A1 | 01-02-2012 |
| | | | | US | 2012019667 | A1 | 26-01-2012 |
| US 2002034337 | A1 | | 21-03-2002 | CA | 2309002 | A1 | 23-11-2001 |
| | | | | US | 2002034337 | A1 | 21-03-2002 |
| | | | | US | 2005276515 | A1 | 15-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020034337 A
- US 5641596 A

- EP 0957367 A
- EP 2413586 A

**Non-patent literature cited in the description**

- **B. T. OH et al.** Advanced Film Grain Noise Extraction and Synthesis for High-Definition Video Coding. *IEEE Transactions On Circuits And Systems For Video Technology,* 2009, vol. 19, 1717-1729